(19) Europäisches Patentamt / European Patent Office / Office européen des brevets

(11) **EP 4 603 862 A1**

(12) **EUROPEAN PATENT APPLICATION**
published in accordance with Art. 153(4) EPC

(43) Date of publication:
**20.08.2025 Bulletin 2025/34**

(21) Application number: **23937226.1**

(22) Date of filing: **20.10.2023**

(51) International Patent Classification (IPC):
**G01S 5/02** (2010.01)

(86) International application number:
**PCT/CN2023/125766**

(87) International publication number:
**WO 2024/234551 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.05.2023 CN 202310575091**

(71) Applicants:
• **Zhongtian Radio Frequency Cable Co., Ltd.
Nantong, Jiangsu 226009 (CN)**
• **Jiangsu Zhongtian Technology Co., Ltd.
Nantong, Jiangsu 226000 (CN)**

(72) Inventors:
• **LIN, Longlong
Nantong, Jiangsu 226000 (CN)**
• **SHEN, Yichun
Nantong, Jiangsu 226000 (CN)**

• **ZHANG, Jiafeng
Nantong, Jiangsu 226000 (CN)**
• **ZHAO, Yunkun
Nantong, Jiangsu 226000 (CN)**
• **XU, Binbin
Nantong, Jiangsu 226000 (CN)**
• **ZHAO, Ruijing
Nantong, Jiangsu 226000 (CN)**
• **WANG, Bin
Nantong, Jiangsu 226000 (CN)**
• **XU, Bohua
Nantong, Jiangsu 226000 (CN)**
• **LAN, Yanrui
Nantong, Jiangsu 226000 (CN)**
• **XU, Zongming
Nantong, Jiangsu 226000 (CN)**

(74) Representative: **Boult Wade Tennant LLP
Salisbury Square House
8 Salisbury Square
London EC4Y 8AP (GB)**

(54) **LEAKAGE APPARATUS, POSITIONING METHOD, AND ELECTRONIC DEVICE**

(57) A leakage apparatus, a positioning method, and an electronic device are provided. The leakage apparatus (20) includes at least one positioning module (21) and at least one non-positioning module (22), at least one positioning area being provided in the positioning module (21); where, the positioning module (21) is connected with the non-positioning module (22), the positioning area in the positioning module (21) is configured to leak a positioning signal, a range obtained by superimposing a coverage area of the positioning signal leaked by each positioning module (21) in a longitudinal direction covers an area where the leakage apparatus (20) is located, the longitudinal direction referring to an extension direction of the leakage apparatus (20). By arranging the positioning modules (21) in the leakage apparatus (20) at intervals, transmission paths of the positioning signal leaked by different positioning modules (21) are obviously different, so that accurate positioning can be performed on the basis of the characteristics of the transmission paths of the positioning signals.

FIG. 2

EP 4 603 862 A1

## Description

The present application claims priority to the Chinese Patent Application No. 202310575091.0, which was filed with the China National Intellectual Property Administration on May 17, 2023 and titled "LEAKAGE APPARATUS, POSITIONING METHOD, AND ELECTRONIC DEVICE", which is hereby incorporated by reference in its entirety.

## TECHNICAL FIELD

The present application relates to positioning technology, and in particular to a leakage apparatus, a positioning method and an electronic device.

## BACKGROUND

With the development of urbanization, more and more large commercial buildings, large hub projects, tunnels, etc. appear in people's daily lives. When people are active in these indoor places, it is difficult for them to quickly know their own position due to factors such as the large area and complex spatial layout of these places. Therefore, people's demand for positioning in large indoor places is becoming more and more urgent. Combined with the development and maturity of Internet of Things technology and its related hardware, indoor positioning technology has developed rapidly.

At present, in order to reduce the blind spots of positioning, there is a solution of using leaky cables for positioning. A plurality of continuous slots are set in the leaky cable for leaking positioning signals. However, in this method, each slot is a leakage point of the positioning signal, which will cause severe multi-path effect, resulting in obvious positioning jitter and poor positioning accuracy.

## SUMMARY

The present disclosure provides a leakage apparatus, a positioning method and an electronic device to solve the problem of poor positioning accuracy due to the multi-path effect of the leakage apparatus in the prior art.

A first aspect of the present disclosure is to provide a leakage apparatus configured to transmit a signal, including: at least one positioning module and at least one non-positioning module, at least one positioning area being provided in the positioning module;

> where, the positioning module is connected with the non-positioning module;
> the positioning area in the positioning module is configured to leak a positioning signal, and a range obtained by superimposing a coverage area of the positioning signal leaked by each positioning module in a longitudinal direction covers an area where the leakage apparatus is located; the longitudinal direction refers to an extension direction of the leakage apparatus.

Another aspect of the present disclosure is to provide a positioning method, including:

> the leakage apparatus according to the first aspect is connected with a positioning assembly, and the positioning assembly is configured to perform, via the leakage apparatus, positioning signal transmission with a terminal device to be positioned;
> the method includes:

>> obtaining duration information or phase information of transmission of a positioning signal between the positioning assembly and the terminal device, in-air transmission information of transmission of the positioning signal in the air, in-apparatus transmission information of transmission of the positioning signal in the leakage apparatus, as well as position information of the positioning assembly and structural information of the leakage apparatus;
>> determining a positioning result of the terminal device according to the duration information or the phase information, as well as the in-air transmission information, the in-apparatus transmission information, the position information of the positioning assembly, and the structural information of the leakage apparatus.

A further aspect of the present disclosure is to provide an electronic device, including:

> a memory;
> a processor; and
> a computer program;

where, the computer program is stored in the memory and is configured to be executed by the processor to implement the positioning method as described in the second aspect above.

A further aspect of the present disclosure is to provide a computer-readable storage medium stored with a computer program which, when executed by a processor, implements the positioning method according to the second aspect.

A further aspect of the present disclosure is to provide a computer program product, including a computer program which, when executed by a processor, implements the positioning method of the second aspect.

The technical effects of the leakage apparatus, the positioning method and the electronic device provided by the present disclosure are as follows.

The leakage apparatus, the positioning method and the electronic device provided in the present embodiment can make transmission paths of positioning signals leaked by different positioning modules have obvious distinctions by setting positioning modules at intervals in the leakage apparatus, and thus can accurately position the terminal device based on the characteristics of the transmission path of the positioning signal.

## BRIEF DESCRIPTION OF DRAWINGS

FIG. 1 illustrates a schematic diagram of a leakage apparatus according to an exemplary embodiment.

FIG. 2 illustrates a schematic structural diagram of a leakage apparatus for transmitting a signal according to an exemplary embodiment of the present disclosure.

FIG. 3 illustrates a schematic structural diagram of a leakage apparatus for transmitting a signal according to another exemplary embodiment of the present disclosure.

FIG. 4 illustrates a schematic structural diagram of a leakage apparatus according to yet another exemplary embodiment of the present disclosure.

FIG. 5 illustrates a schematic structural diagram of a leakage apparatus according to yet another exemplary embodiment of the present disclosure.

FIG. 6 illustrates a schematic flow chart of a positioning method according to an exemplary embodiment of the present disclosure.

FIG. 7 illustrates a communication architecture diagram according to an exemplary embodiment of the present disclosure.

FIG. 8 illustrates a structural diagram including a positioning assembly and a leakage apparatus according to an embodiment of the present disclosure.

FIG. 9 illustrates another structural diagram including a positioning assembly and a leakage apparatus according to an embodiment of the present disclosure.

FIG. 10 illustrates still another structural diagram including a positioning assembly and a leakage apparatus according to an embodiment of the present disclosure.

FIG. 11 illustrates a structural diagram of an electronic device according to an exemplary embodiment of the present disclosure.

## DESCRIPTION OF EMBODIMENTS

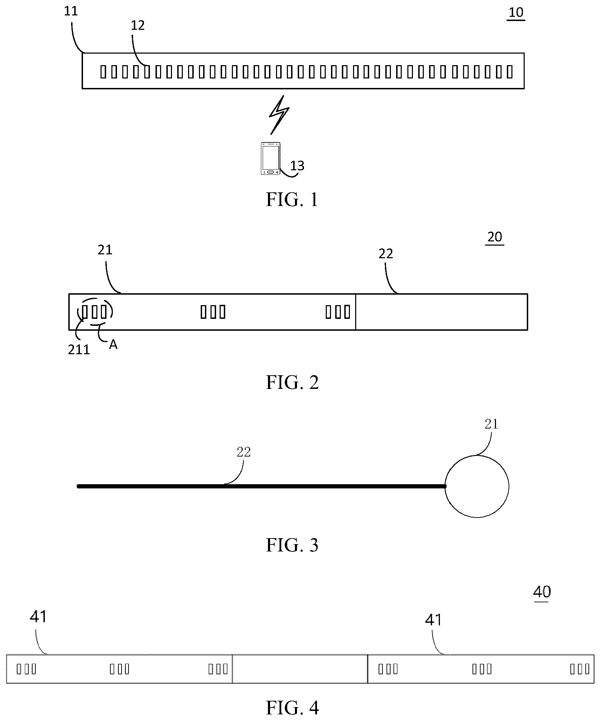

FIG. 1 illustrates a schematic diagram of a leakage apparatus according to an exemplary embodiment.

As shown in FIG. 1, one end 11 of a leakage apparatus 10 can be connected with a positioning assembly, and the positioning assembly can transmit a positioning signal for initiating positioning to the leakage apparatus 10. The leakage apparatus 10 is provided with a plurality of slots 12, from which the positioning signal is leaked.

A terminal device 13 can receive the positioning signal leaked from the slots 12, it can also process the positioning signal, so as to obtain and send a positioning signal for response. The positioning signal for response can also enter the leakage apparatus 10 through the slots 12, and thus be received by the positioning assembly.

However, the slots 12 provided in the leakage apparatus 10 are evenly distributed, which leads to each slot 12 being able to leak the positioning signal. Besides, since the slots 12 are continuous, characteristics of transmission paths of the positioning signals leaked from adjacent slots 12 are not distinct, so that an accurate positioning cannot be performed based on the characteristics of the transmission paths.

FIG. 2 illustrates a schematic structural diagram of a leakage apparatus for transmitting a signal according to an exemplary embodiment of the present disclosure.

As shown in FIG. 2, a leakage apparatus 20 provided in the present disclosure includes at least one positioning module 21 and at least one non-positioning module 22.

FIG. 3 illustrates a schematic structural diagram of a leakage apparatus for transmitting a signal according to another exemplary embodiment of the present disclosure.

As shown in FIG. 3, a leakage apparatus 30 provided by the present disclosure includes at least one positioning module 21 and at least one non-positioning module 22. The positioning module 21 is provided with at least one positioning area.

The positioning module 21 and the non-positioning module 22 are connected.

The positioning area in the positioning module 21 is configured to leak a positioning signal. For example, a positioning assembly for transmitting or receiving a signal is connected with one end of the leakage apparatus 20, and the positioning assembly transmits a positioning signal to the leakage apparatus 20, and then the positioning signal is transmitted outward through the positioning area of the positioning module. After a terminal device receives the positioning signal, it can also feed back a positioning signal to the positioning assembly through the leakage apparatus 20. In the present embodiment, the signal sent by the positioning assembly to the terminal device through the leakage apparatus 20, and the signal responded by the terminal device to the positioning assembly through the leakage apparatus 20 are both referred to as a positioning signal.

For example, the positioning assembly and the terminal device can implement at least one transmission-reception response process to realize positioning. For example, the positioning assembly transmits a pulse signal for request (a positioning signal for request) at time Ta1 and the terminal device receives the signal at time Tb1; then, after applying certain processing measures to the pulse signal, the terminal device transmits a signal for response (a positioning signal for response) at time Tb2, and the positioning assembly receives the signal at time Ta2.

In an optional implementation, the positioning module 21 may be a positioning leakage apparatus, and the positioning area of the positioning leakage apparatus is provided with a first slot configured to leak a positioning signal. The leakage mentioned in the present embodiment refers to that the positioning signal can pass through the first slot, including both the positioning signal entering the air from the leakage apparatus and the positioning signal entering the leakage apparatus from the air.

In another implementation, the positioning module 21 may also be an antenna, which can transmit a positioning signal outward and also receive a positioning signal sent by the terminal device.

The non-positioning module 22 includes any one of a communication leakage apparatus, a feeder, a power divider, a coupler, a combiner, a connector, a jumper, a load, an antenna, etc., or any combination thereof.

In an optional implementation, when a positioning leakage apparatus serving as the positioning module 21 and a communication leakage apparatus serving as the non-positioning module 22 have the same specifications, they can both be located in the same cable. For example, the leakage apparatus 20 is a cable, a part of the cable is set as the positioning leakage apparatus, which serves as the positioning module 21, and the other part is set as the communication leakage apparatus, which serves as the non-positioning module 22. The specifications here refer to radial dimensions of the positioning module and the non-positioning module. The radial dimensions can be understood as diameters of the cross-sections of the positioning module and the non-positioning module, and specifically can be radial dimensions of internal insulation layers of the positioning module and the non-positioning module.

In another optional implementation, the positioning module 21 and the non-positioning module 22 may be two independent apparatuses, which are spliced together to form the leakage apparatus 20. For example, the positioning module 21 is a positioning leakage apparatus, and the non-positioning module 22 is another communication leakage apparatus, and the two apparatuses may be spliced together to form the leakage apparatus 20. For another example, the positioning module 21 may be an antenna, and the non-positioning module 22 may be a feeder, and they may be spliced together to form the leakage apparatus 20.

By arranging non-positioning modules 22 of positioning modules 21 at intervals, and enabling the positioning modules 21 to leak positioning signals, there are significant differences between transmission paths of the positioning signals leaked by different positioning modules 21, so that a positioning result can be accurately determined based on the transmission paths.

The shape and size of the first slot 211 are determined according to the positioning signal. For example, a hole can be provided in the positioning module 21 according to a frequency of a positioning signal, so that the positioning signal can leak from the first slot 211 into the air, or enter the leakage apparatus from the air through the first slot 211.

As shown in FIG. 2, a plurality of first slots 211 may be provided in the positioning module 21. For example, a plurality of positioning areas A may be provided in the positioning module 21, and a plurality of first slots 211 may be provided in each positioning area. In the present implementation, there is a certain distance between the positioning areas A, so that the transmission paths of positioning signals leaked from the positioning areas A are obviously different, so as to achieve an effect of accurately positioning.

In the present implementation, even if the positioning signal is transmitted through multiple transmission paths, the number of transmission paths of the positioning signal is limited and the difference between the paths is significant. Compared to the solution of arranging slots continuously, the number of transmission paths is much smaller, so positioning can be performed based on fewer transmission paths.

A longitudinal length of the positioning area A may be, for example, in a range of 0.01 m to 2000 m, and an interval between the positioning areas may be 0.02 m to 1000 m. For example, it also may be 0.02 m to 300 m.

Optionally, positions of the first slots 211 in each positioning area A are relatively close, and transmission paths of positioning signals leaked from first slots 211 in the same positioning area A are identified as being the same. There can be a certain distance between different positioning areas A, so that signals leaked from different positioning areas A are identified as having different transmission paths. That is, there is an obvious difference between the transmission paths of the positioning signals transmitted from different positioning areas A.

Furthermore, the non-positioning module 22 is not provided with a first slot, that is, the non-positioning module 22 will not leak a positioning signal.

In an optional implementation, the non-positioning module 22 may not be provided with a slot, and thus no signal will be leaked. In another implementation, the non-positioning module 22 may also be provided with a hole as required, but the slot is different from the first slot in specifications, for example, the slot has a different shape and/or size, so that the non-positioning module 22 does not leak a positioning signal.

In an actual application, if there is a slot in the non-positioning module 22, the non-positioning module 22 may also leak a part of positioning signals. In order to enable the terminal device to distinguish a leakage position of a positioning signal, an intensity of the positioning signal leaked by the positioning module can be made at least 2 decibels (dB) greater than that of the positioning signal leaked by the non-positioning module. In an optional implementation, the weaker positioning signal leaked by the non-positioning module can be ignored during positioning, thereby not affecting the positioning accuracy.

FIG. 4 illustrates a schematic structural diagram of a leakage apparatus according to another exemplary embodiment of the present disclosure.

As shown in FIG. 4, when a plurality of positioning modules 41 are provided in a leakage apparatus 40, an accumulated range of positioning signals leaked by respective positioning modules 41 in a longitudinal direction covers an area where the leakage apparatus 40 is located. For example, a total length of the leakage apparatus 40 is L, and a sum of lengths of coverage areas of the positioning signals leaked by respective positioning modules 41 in the longitudinal direction is greater than L, so that the positioning signals leaked by the plurality of positioning modules 41 can cover the area where the leakage apparatus 40 is located, so as to avoid a positioning blind area.

The leakage apparatus for transmitting a signal provided by the present disclosure enables transmission paths of positioning signals leaked from different positioning modules to have obvious differences by arranging the positioning modules at intervals, thereby enabling an accurate positioning based on the characteristics of the transmission paths of the positioning signals.

In any implementation of the present disclosure, an interval length between positioning modules ranges from 0.02 m to 1000 m.

In any implementation of the present disclosure, a transmission loss generated when a positioning leakage apparatus transmits a positioning signal is at most 80 dB, so as to prevent the positioning signal from being too weak in intensity when it is transmitted to an end of the leakage apparatus.

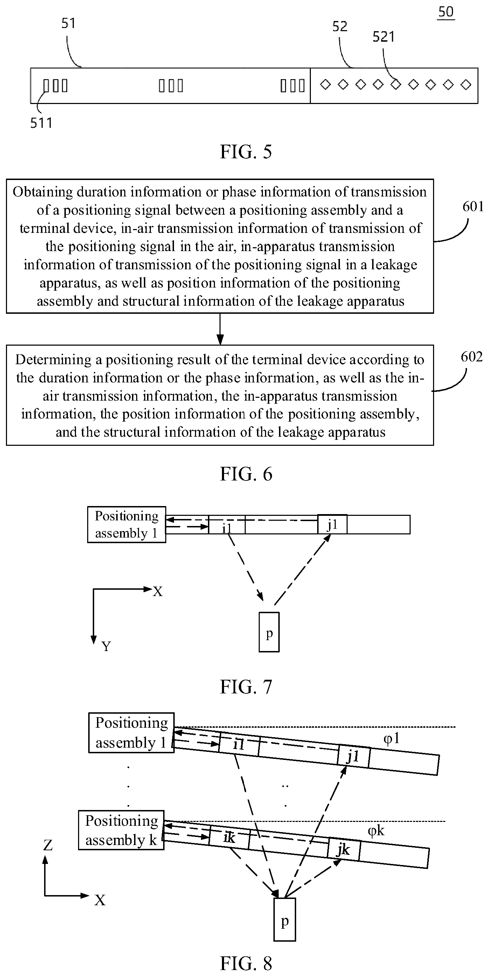

FIG. 5 illustrates a schematic structural diagram of a leakage apparatus according to another exemplary embodiment of the present disclosure.

As shown in FIG. 5, in a leakage apparatus 50 provided by the present disclosure, first slots 511 are provided in a positioning module 51, and second slots 521 are provided in a non-positioning module 52. The second slot 521 is configured to leak a communication signal transmitted in the leakage apparatus.

The leakage apparatus 50 can be connected with a positioning assembly, and a positioning signal in the positioning assembly can be transmitted to the leakage apparatus 50 and leak into the air through the first slots. A positioning signal for response sent by a terminal device can also be transmitted to the leakage apparatus through the first slots and then transmitted to the positioning assembly.

Specifically, the leakage apparatus 50 can also be connected with a communication assembly, and a communication signal in the communication assembly can be transmitted to the leakage apparatus 50 and leak into the air through the second slots. The communication signal sent by the terminal device can also be transmitted to the leakage apparatus through the second slots and then transmitted to the communication assembly.

Furthermore, the positioning signal will not leak from the second slots 521, and the communication signal will not leak from the first slots 511. Specifically, the shape and size of the first slots 511 can be set based on the positioning signal, and the shape and size of the second slots 521 can be set based on the communication signal. For example, the shape and size of a corresponding slot can be set according to a frequency of a signal.

In an optional implementation, the positioning module is a positioning leakage apparatus, and the non-positioning module is a communication leakage apparatus, and specifications of the positioning leakage apparatus and the communication leakage apparatus are different. For example, a radial dimension ratio between the positioning leakage apparatus and the communication leakage apparatus can be 0.25:4. If the radial dimension ratio of the two apparatus specifications is too large, it will cause the problem of difficulty in connecting the apparatuses. Therefore, the radial dimension ratio of the positioning leakage apparatus and the communication leakage apparatus can be set within the range of 0.25:4.

FIG. 6 illustrates a schematic flow chart of a positioning method according to an exemplary embodiment of the present disclosure.

Any one of the above leakage apparatuses is connected with a positioning assembly, and the positioning assembly is configured to perform positioning signal transmission with a terminal device to be positioned via the leakage apparatus. Based on the method provided by the present disclosure, the terminal device can be positioned using transmission information of the positioning signal between the positioning assembly and the terminal device.

As shown in FIG. 6, the positioning method provided by the present disclosure includes:

Step 601, obtaining duration information or phase information of transmission of a positioning signal between a positioning assembly and a terminal device, in-air transmission information of transmission of the positioning signal in the air, in-apparatus transmission information of transmission of the positioning signal in a leakage apparatus, as well as position information of the positioning assembly and structural information of the leakage apparatus;

where, the positioning signal includes a signal sent by the positioning assembly to the terminal device and a signal fed back by the terminal device to the positioning assembly.

FIG. 7 illustrates a communication architecture diagram according to an exemplary embodiment of the present disclosure.

As shown in FIG. 7, a positioning assembly 1 is connected with a leakage apparatus 1. The positioning assembly 1 transmits a positioning signal to a terminal device p through a positioning area $i_1$ in a positioning module of the leakage apparatus. After the terminal device p receives the positioning signal, the terminal device p feeds back another positioning signal, which is received by a positioning area $j_1$ in a positioning module of the leakage apparatus and transmitted to the positioning assembly 1.

The positioning area $i_1$ and the positioning area $j_1$ can be located in the same positioning module or in different positioning modules. The drawings of the embodiments of the present disclosure only schematically indicate the positions of the two positioning areas, rather than limiting the positions of the two positioning areas.

The leakage apparatus is composed of several cable modules and connecting modules. The positioning module is located on the cable module or the connecting module. The positioning module includes at least one positioning area. The positioning module where the positioning area $i_1$ is located is connected with the positioning assembly 1 through $m_{i_{1g}}$ trunk cable modules and $m_{i_{1b}}$ branch cable modules. The positioning module where the positioning area $j_1$ is located is connected with the positioning assembly 1 through $m_{j_{1g}}$ trunk cable modules and $m_{j_{1b}}$ branch cable modules.

When there is only one transmission-reception response between the positioning assembly and the terminal device, that is, in a scenario where the positioning assembly sends a signal at time Ta1 and the terminal device receives the signal at time Tb1, the duration information of the positioning signal's transmission between the positioning assembly and the terminal device can be twice the time-of-flight of the positioning signal between the positioning assembly and the terminal device, that is, T = |2*(Tb1-Ta1)|; the phase information of the positioning signal's transmission between the positioning assembly and the terminal device can be twice the phase change of the positioning signal between the positioning assembly and the terminal device, that is, $\psi$ = |2*($\psi$b1-$\psi$a1)|, where $\psi$b1 is a phase of the positioning signal received by the terminal device, and $\psi$a1 is a phase of the positioning signal sent by the positioning assembly.

When there are at least two transmission-reception responses between the positioning assembly and the terminal device, for example, the positioning assembly sends a signal at time Ta1, the terminal device receives the signal at time Tb11; then, the terminal device sends a signal at time Tb2, and the positioning assembly receives the signal at time Ta2, the duration information of the positioning signal's transmission between the positioning assembly and the terminal device can be a total time of flight of the positioning signal between the positioning assembly and the terminal device, that is, T = |(Ta1-Ta2)-(Tb1-Tb2)|; the phase information of the positioning signal's transmission between the positioning assembly and the terminal device can be a total phase change of the positioning signal between the positioning assembly and the terminal device, that is, $\psi$ = |($\psi$a1-$\psi$a2)-($\psi$b1-$\psi$b2)|. It should be noted that the above only takes two transmission-reception responses as an example. When the number of transmission-reception responses increases, those skilled in the art can determine a corresponding total time of flight or total phase change based on the above content.

Specifically, the in-air transmission information of transmission of the positioning signal in the air includes: an electromagnetic wave transmission speed c in the air, and/or a wavelength $\lambda$ of the positioning signal in the air.

Furthermore, the in-apparatus transmission information of transmission of the positioning signal in the leakage apparatus includes:

a wavelength $\lambda_{cek}$ ($e_k$ = 0,1,2,...,$m_{ikg}$) of the positioning signal at the $e_k$-th trunk cable module in the leakage apparatus $k$;

a wavelength $\lambda_{cfk}$ ($f_k$ = 0,1,2,...,$m_{ikg}$) of the positioning signal at the $f_k$-th branch cable module in the leakage apparatus

$k$;

a wavelength $\lambda_{cuk}$ ($u_k = 0,1,2,...,m_{ikg}$) of the positioning signal at the $u_k$-th trunk cable module in the leakage apparatus $k$;

a wavelength $\lambda_{cvk}$ ($v_k = 0,1,2,...,m_{ikg}$) of the positioning signal at the $v_k$-th branch cable module in the leakage apparatus k;

a wavelength $\lambda_{cik}$ of the positioning signal in a positioning area $i_{k,}$; a wavelength of a positioning signal in a positioning area $j_k$;

a delay $\Delta t_{ik}$, raised from passing through a connecting module when the positioning signal passes through the positioning area $i_k$;

a delay $\Delta t_{jk}$, raised from passing through a connecting module when the positioning signal passes through the positioning area $j_1$;

a phase delay , raised from passing through a connecting module when the positioning signal passes through the positioning area $i_1$;

a phase delay $\Delta\psi_{jk}$, raised from passing through a connecting module when the positioning signal passes through the positioning area $j_1$;

where, the above-mentioned connecting module includes a power divider, a coupler, a combiner, a connector, a feeder, a jumper, etc.;

a transmission rate $a$ of the positioning signal in the trunk cable module or branch cable module.

The position information of the positioning assembly includes coordinate values $x_k$, $y_k$, $z_k$ of the positioning assembly in X, Y, and Z directions.

The structural information of the leakage apparatus includes:

a length $l_{e_k}$ ($e_k = 0,1,2,...,m_{ikg}$) of the $e_k$-th trunk cable module connecting the positioning area $i_k$ and the positioning assembly $k$;

a length $l_{f_k}$ ($f_k = 0,1,2,...,m_{ikb}$) of the $f_k$-th branch cable module connecting the positioning area $i_k$ and positioning assembly $k$;

a distance $l_{i_k}$ between a signal transceiving position of a positioning area block $i_k$ and a signal input port of a positioning module where the positioning area $i_k$ is located; the positioning area $i_k$ is the $i_k$-th positioning area in the leakage apparatus $k$ away from the positioning assembly $k$; the leakage apparatus $k$ is connected with the positioning assembly k;

a length $l_{u_k}$ ($u_k = 0,1,2,...,m_{jkg}$) of the $u_k$-th trunk cable module connecting the positioning area $j_k$ and the positioning assembly $k$ ;

a length $l_{v_k}$ ($v_k = 0,1,2,...,m_{ikb}$) of the $v_k$-th branch cable module connecting the positioning area $j_k$ and the positioning assembly $k$ ;

a distance between a signal transceiving position of the positioning area $j_k$ and a signal input port of a positioning module where the positioning area $j_k$ is located, and the positioning area $j_k$ is the $j_k$-th positioning area in the leakage apparatus $k$ away from the positioning assembly k;

where, the above ($i_k, j_k = 1,2,3...$);

an angle $\theta$ between the cable module or positioning area and a positive direction of z-axis;

an angle $\varphi$ of a clockwise rotation from x-axis to a projection of the cable module or positioning area on the xOy plane, viewed from the positive z-axis;

a position error (($\Delta x$, $\Delta y$, $\Delta z$)) between a start end of a subsequent cable module or a positioning area and a final end of a previous cable module.

the number $m_{ikg}$ of trunk cable modules and the number $m_{ikb}$ of branch cable modules connected between the positioning area $i_k$ and the positioning assembly $k$; the number $m_{jkg}$ of trunk cable modules and the number $m_{jkb}$ of branch cable modules connected between the positioning area $j_k$ and the positioning assembly $k$.

The above $k$ is used to identify the positioning assembly. For example, when there is only one positioning assembly, $k$ is equal to 1; when there are two positioning assemblies, $k$ is 1 and 2.

Step 602, determining a positioning result of the terminal device according to the duration information or the phase information, as well as the in-air transmission information, the in-apparatus transmission information, the position information of the positioning assembly, and the structural information of the leakage apparatus.

When the positioning signal is transmitted between the terminal device and the positioning assembly 1, a distance of the positioning signal transmission in the air is equal to a sum of the distances between the terminal device and the positioning areas $i_1$ and $j_1$. Based on this relationship, a position of the terminal device can be determined.

Specifically, based on the above-mentioned parameters obtained, a distance that a positioning signal is transmitted in the air can be determined, and a sum of distances between the terminal device and the positioning areas

$i_1, j_1$ can also be determined. The sum of distances can include an unknown parameter of the position of the terminal device (for example, any one or more of $x, y, z$), and then based on the above-mentioned equal relationship of these distances, any one or more values of ($x, y, z$) are determined to obtain a positioning result of the terminal device.

In an optional implementation, a product of a time-of-flight of a positioning signal in the air during a transmission between the positioning assembly and the terminal device and the light speed can be used as a transmission distance of the positioning signal in the air. In addition, a product of a phase change value of the positioning signal in the air during the transmission between the positioning assembly and the terminal device and (wavelength/$2\pi$) can also be used as a transmission distance of the positioning signal in the air, where the wavelength refers to a wavelength of the positioning signal transmitted in the air.

Specifically, the time-of-flight or the phase change value of the positioning signal in the air can be determined based on the duration information or the phase information, as well as the in-apparatus transmission information and the structural information of the leakage apparatus, and then a total transmission distance can be determined based on the in-air transmission information of the positioning signal.

For example, when there is only one positioning assembly 1, the transmission distance of the positioning signal in the air can be:

$$\left( T_1 - \Delta t_{i_1} - \Delta t_{j_1} - \sum_{0}^{e_1 = m_{i_1 g}} \frac{l_{e_1}}{a_{e_1} \cdot c} - \sum_{0}^{f_1 = m_{i_1 b}} \frac{l_{f_1}}{a_{f_1} \cdot c} - \sum_{0}^{u_1 = m_{j_1 g}} \frac{l_{u_1}}{a_{u_1} \cdot c} - \sum_{0}^{v_1 = m_{j_1 b}} \frac{l_{v_1}}{a_{v_1} \cdot c} - \frac{l_{i_1}}{a_{i_1} \cdot c} - \frac{l_{j_1}}{a_{j_1} \cdot c} \right) \cdot c ;$$

or

$$\left( \psi_1 - \Delta \psi_{i_1} - \Delta \psi_{j_1} - \sum_{0}^{e_1 = m_{i_1 g}} \frac{2\pi \cdot l_{e_1}}{\lambda_{c e_1}} - \sum_{0}^{f_1 = m_{i_1 b}} \frac{2\pi \cdot l_{f_1}}{\lambda_{c f_1}} - \sum_{0}^{u_1 = m_{j_1 g}} \frac{2\pi \cdot l_{u_1}}{\lambda_{c u_1}} - \sum_{0}^{v_1 = m_{j_1 b}} \frac{2\pi \cdot l_{v_1}}{\lambda_{c v_1}} - \frac{2\pi \cdot l_{i_1}}{\lambda_{c i_1}} - \frac{2\pi \cdot l_{j_1}}{\lambda_{c j_1}} \right) \cdot \frac{\lambda}{2\pi} ;$$

where, $T_1$ refers to duration information of transmission of the positioning signal between the positioning assembly 1 and the terminal device, and $\psi_1$ refers to phase information of transmission of the positioning signal between the positioning assembly 1 and the terminal device.

Specifically, a sum of relative distance between the terminal device and each target positioning area of the leakage apparatus can be determined based on the position information of the positioning assembly, the structural information of the leakage apparatus, and an unknown position of the terminal device; where, in a transmission path for transmission of the positioning signal between the positioning assembly and the terminal device, the positioning signal leaks into the air through the target positioning area of the leakage apparatus, and/or the positioning signal enters the leakage apparatus from the air through the target positioning area; and the sum of the relative distance includes the unknown position of the terminal device.

In an optional implementation, a distance sum formula including unknown position parameters of the terminal device may be constructed to represent the sum of distances between the terminal device and the target positioning areas $i_1 j_1$, for example, it may be:

$$\sqrt{\left[x - x_1 - \sum_{0}^{e_1=m_{i_{1g}}}(l_{e_1}sin\theta_{e_1}cos\varphi_{e_1}+\Delta x_{e_1}) - \sum_{0}^{f_1=m_{i_{1b}}}(l_{f_1}sin\theta_{f_1}cos\varphi_{f_1}+\Delta x_{f_1}) - (l_{i_1}sin\theta_{i_1}cos\varphi_{i_1}+\Delta x_{i_1})\right]^2 + \left[y - y_1 - \sum_{0}^{e_1=m_{i_{1g}}}(l_{e_1}sin\theta_{e_1}sin\varphi_{e_1}+\Delta y_{e_1}) - \sum_{0}^{f_1=m_{i_{1b}}}(l_{f_1}sin\theta_{f_1}sin\varphi_{f_1}+\Delta y_{f_1}) - (l_{i_1}sin\theta_{i_1}sin\varphi_{i_1}+\Delta y_{i_1})\right]^2 + \left[z_1 + \sum_{0}^{e_1=m_{i_{1g}}}(l_{e_1}cos\theta_{e_1}+\Delta z_{e_1}) + \sum_{0}^{f_1=m_{i_{1b}}}(l_{f_1}cos\theta_{f_1}+\Delta z_{f_1}) + (l_{i_1}cos\theta_{i_1}+\Delta z_{i_1}) - z\right]^2}$$

$$+\sqrt{\left[x - x_1 - \sum_{0}^{u_1=m_{j_{1g}}}(l_{u_1}sin\theta_{u_1}cos\varphi_{u_1}+\Delta x_{u_1}) - \sum_{0}^{v_1=m_{j_{1b}}}(l_{v_1}sin\theta_{v_1}cos\varphi_{v_1}+\Delta x_{v_1}) - (l_{j_1}sin\theta_{j_1}cos\varphi_{j_1}+\Delta x_{j_1})\right]^2 + \left[y - y_1 - \sum_{0}^{u_1=m_{j_{1g}}}(l_{u_1}sin\theta_{u_1}sin\varphi_{u_1}+\Delta y_{u_1}) - \sum_{0}^{v_1=m_{j_{1b}}}(l_{v_1}sin\theta_{v_1}sin\varphi_{v_1}+\Delta y_{v_1}) - (l_{j_1}sin\theta_{j_1}sin\varphi_{j_1}+\Delta y_{j_1})\right]^2 + \left[z_1 + \sum_{0}^{u_1=m_{j_{1g}}}(l_{u_1}cos\theta_{u_1}+\Delta z_{u_1}) + \sum_{0}^{v_1=m_{j_{1b}}}(l_{v_1}cos\theta_{v_1}+\Delta z_{v_1}) + (l_{j_1}cos\theta_{j_1}+\Delta z_{j_1}) - z\right]^2} \quad ;$$

where $x$, $y$, and $z$ are position parameters of the terminal device.

In an optional implementation, any one or two parameters of $x$, $y$, and $z$ can be assigned values during positioning. For example, $z$ can be set to a first preset value and $y$ can be set to a second preset value. The value of $x$ can be calculated during positioning to obtain the positioning result of the terminal device. The $x$, $y$, and $z$ are assigned values based on a position of the leakage apparatus, or of a target positioning area in the leakage apparatus for leaking signal to the terminal device, or of a target positioning area for receiving signal fed back by the terminal device, or specific scene information.

In another optional implementation, multiple positioning methods may be used simultaneously to determine the position parameter(s) of the terminal device. For example, at least two of the methods described below may be used simultaneously to determine the values of $x$, $y$, and $z$.

Furthermore, information of the unknown position can be determined based on the total transmission distance in the air of the positioning signal and the sum of the relative distance including the unknown position of the terminal device, where the information of the unknown position is the positioning result of the terminal device.

Based on the relationship that the transmission distance of the positioning signal in the air is equal to the sum of the distances between the terminal device and the positioning modules $i_1$ and $j_1$, the positioning result of the terminal device can be determined by the following formula:

$$\sqrt{\begin{aligned}&\left[x - x_1 - \sum_0^{e_1=m_{i_{1g}}}(l_{e_1}\sin\theta_{e_1}\cos\varphi_{e_1}+\Delta x_{e_1}) - \sum_0^{f_1=m_{i_{1b}}}(l_{f_1}\sin\theta_{f_1}\cos\varphi_{f_1}+\Delta x_{f_1}) - \left(l_{i_1}\sin\theta_{i_1}\cos\varphi_{i_1}+\Delta x_{i_1}\right)\right]^2 \\ &+\left[y - y_1 - \sum_0^{e_1=m_{i_{1g}}}(l_{e_1}\sin\theta_{e_1}\sin\varphi_{e_1}+\Delta y_{e_1}) - \sum_0^{f_1=m_{i_{1b}}}(l_{f_1}\sin\theta_{f_1}\sin\varphi_{f_1}+\Delta y_{f_1}) - \left(l_{i_1}\sin\theta_{i_1}\sin\varphi_{i_1}+\Delta y_{i_1}\right)\right]^2 \\ &+\left[z_1 + \sum_0^{e_1=m_{i_{1g}}}(l_{e_1}\cos\theta_{e_1}+\Delta z_{e_1}) + \sum_0^{f_1=m_{i_{1b}}}(l_{f_1}\cos\theta_{f_1}+\Delta z_{f_1}) + \left(l_{i_1}\cos\theta_{i_1}+\Delta z_{i_1}\right)-z\right]^2\end{aligned}}$$

$$+\sqrt{\begin{aligned}&\left[x - x_1 - \sum_0^{u_1=m_{j_{1g}}}(l_{u_1}\sin\theta_{u_1}\cos\varphi_{u_1}+\Delta x_{u_1}) - \sum_0^{v_1=m_{j_{1b}}}(l_{v_1}\sin\theta_{v_1}\cos\varphi_{v_1}+\Delta x_{v_1}) - \left(l_{j_1}\sin\theta_{j_1}\cos\varphi_{j_1}+\Delta x_{j_1}\right)\right]^2 \\ &+\left[y - y_1 - \sum_0^{u_1=m_{j_{1g}}}(l_{u_1}\sin\theta_{u_1}\sin\varphi_{u_1}+\Delta y_{u_1}) - \sum_0^{v_1=m_{j_{1b}}}(l_{v_1}\sin\theta_{v_1}\sin\varphi_{v_1}+\Delta y_{v_1}) - \left(l_{j_1}\sin\theta_{j_1}\sin\varphi_{j_1}+\Delta y_{j_1}\right)\right]^2 \\ &+\left[z_1 + \sum_0^{u_1=m_{j_{1g}}}(l_{u_1}\cos\theta_{u_1}+\Delta z_{u_1}) + \sum_0^{v_1=m_{j_{1b}}}(l_{v_1}\cos\theta_{v_1}+\Delta z_{v_1}) + \left(l_{j_1}\cos\theta_{j_1}+\Delta z_{j_1}\right)-z\right]^2\end{aligned}}$$

$$=\left(T_1 - \Delta t_{i_1} - \Delta t_{j_1} - \sum_0^{e_1=m_{i_{1g}}}\frac{l_{e_1}}{a_{e_1}\cdot c} - \sum_0^{f_1=m_{i_{1b}}}\frac{l_{f_1}}{a_{f_1}\cdot c} - \sum_0^{u_1=m_{j_{1g}}}\frac{l_{u_1}}{a_{u_1}\cdot c} - \sum_0^{v_1=m_{j_{1b}}}\frac{l_{v_1}}{a_{v_1}\cdot c} - \frac{l_{i_1}}{a_{i_1}\cdot c} - \frac{l_{j_1}}{a_{j_1}\cdot c}\right)\cdot c \; ;$$

or:

$$\sqrt{\begin{aligned}&\left[x - x_1 - \sum_0^{e_1=m_{i_{1g}}}(l_{e_1}\sin\theta_{e_1}\cos\varphi_{e_1}+\Delta x_{e_1}) - \sum_0^{f_1=m_{i_{1b}}}(l_{f_1}\sin\theta_{f_1}\cos\varphi_{f_1}+\Delta x_{f_1}) - \left(l_{i_1}\sin\theta_{i_1}\cos\varphi_{i_1}+\Delta x_{i_1}\right)\right]^2 \\ &+\left[y - y_1 - \sum_0^{e_1=m_{i_{1g}}}(l_{e_1}\sin\theta_{e_1}\sin\varphi_{e_1}+\Delta y_{e_1}) - \sum_0^{f_1=m_{i_{1b}}}(l_{f_1}\sin\theta_{f_1}\sin\varphi_{f_1}+\Delta y_{f_1}) - \left(l_{i_1}\sin\theta_{i_1}\sin\varphi_{i_1}+\Delta y_{i_1}\right)\right]^2 \\ &+\left[z_1 + \sum_0^{e_1=m_{i_{1g}}}(l_{e_1}\cos\theta_{e_1}+\Delta z_{e_1}) + \sum_0^{f_1=m_{i_{1b}}}(l_{f_1}\cos\theta_{f_1}+\Delta z_{f_1}) + \left(l_{i_1}\cos\theta_{i_1}+\Delta z_{i_1}\right)-z\right]^2\end{aligned}}$$

$$+\sqrt{\begin{aligned}&\left[x - x_1 - \sum_0^{u_1=m_{j_{1g}}}(l_{u_1}\sin\theta_{u_1}\cos\varphi_{u_1}+\Delta x_{u_1}) - \sum_0^{v_1=m_{j_{1b}}}(l_{v_1}\sin\theta_{v_1}\cos\varphi_{v_1}+\Delta x_{v_1}) - \left(l_{j_1}\sin\theta_{j_1}\cos\varphi_{j_1}+\Delta x_{j_1}\right)\right]^2 \\ &+\left[y - y_1 - \sum_0^{u_1=m_{j_{1g}}}(l_{u_1}\sin\theta_{u_1}\sin\varphi_{u_1}+\Delta y_{u_1}) - \sum_0^{v_1=m_{j_{1b}}}(l_{v_1}\sin\theta_{v_1}\sin\varphi_{v_1}+\Delta y_{v_1}) - \left(l_{j_1}\sin\theta_{j_1}\sin\varphi_{j_1}+\Delta y_{j_1}\right)\right]^2 \\ &+\left[z_1 + \sum_0^{u_1=m_{j_{1g}}}(l_{u_1}\cos\theta_{u_1}+\Delta z_{u_1}) + \sum_0^{v_1=m_{j_{1b}}}(l_{v_1}\cos\theta_{v_1}+\Delta z_{v_1}) + \left(l_{j_1}\cos\theta_{j_1}+\Delta z_{j_1}\right)-z\right]^2\end{aligned}}$$

$$=\left(\psi_1 - \Delta\psi_{i_1} - \Delta\psi_{j_1} - \sum_0^{e_1=m_{i_{1g}}}\frac{2\pi\cdot l_{e_1}}{\lambda_{ce_1}} - \sum_0^{f_1=m_{i_{1b}}}\frac{2\pi\cdot l_{f_1}}{\lambda_{cf_1}} - \sum_0^{u_1=m_{j_{1g}}}\frac{2\pi\cdot l_{u_1}}{\lambda_{cu_1}} - \sum_0^{v_1=m_{j_{1b}}}\frac{2\pi\cdot l_{v_1}}{\lambda_{cv_1}} - \frac{2\pi\cdot l_{i_1}}{\lambda_{ci_1}} - \frac{2\pi\cdot l_{j_1}}{\lambda_{cj_1}}\right)\cdot\frac{\lambda}{2\pi} \; .$$

When only one assembly is set up and only any one of the above formulas is used to determine the position of the terminal device, a method of pre-assigning values to any two parameters of $x$, $y$, and $z$ can be adopted so that there is only one unknown variable in the above equation.

When $i_1=j_1$, the positioning assembly 1 and the terminal device implement at least one transmission-reception response process through the same transmission path, i.e., through the transmission paths passing the same positioning area on the leakage apparatus. When there is only one transmission-reception response, $T$ is twice a total transmission duration of a single path between the two positioning assemblies.

When $i_1\neq j_1$, the positioning assembly 1 and the terminal device implement at least two transmission-reception response processes through different transmission paths, i.e., through transmission paths passing different positioning areas on the leakage apparatus. $T$ is a total transmission duration of two paths between the two positioning assemblies.

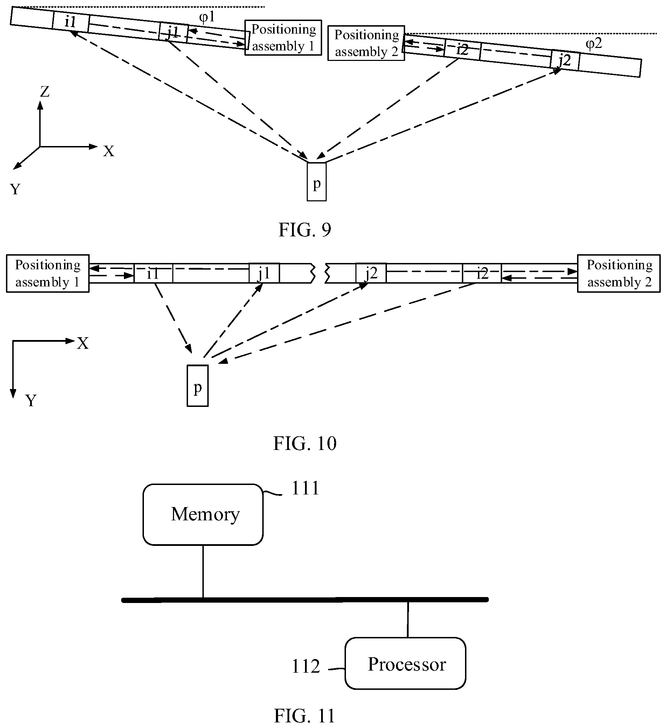

In an actual application, the positioning assembly and the leakage apparatus can be arranged according to requirements. For example, FIG. 8 illustrates a structural diagram of a positioning assembly and a leakage apparatus according to an embodiment of the present disclosure. FIG. 9 illustrates another structural diagram of a positioning assembly and a leakage apparatus according to an embodiment of the present disclosure.

As shown in FIG. 8, k positioning assemblies 81 (positioning assembly 1-positioning assembly $k$) and leakage apparatuses 82 (leakage apparatus 1-leakage apparatus $k$) corresponding to the positioning assemblies are provided, where the positioning assembly 81 is connected with the leakage apparatus 82 corresponding thereto, and each positioning assembly 81 performs positioning signal transmission with the terminal device via the leakage apparatus 82 connected thereto.

As shown in FIG. 9, two positioning assemblies and leakage apparatuses corresponding to the positioning assemblies are provided, where one positioning assembly is connected with a first end of one leakage apparatus, and the other positioning assembly is connected with a second end of the other leakage apparatus.

In the present implementation, since all the $k$ positioning assemblies can perform signal transmission with the terminal device, there are $k$ signal transmission processes. For example, the positioning assembly 1 sends a positioning signal to the terminal device through a positioning area $i_1$ of the leakage apparatus 1, and the terminal device feeds back a positioning signal to the positioning assembly 1 through a positioning area $j_1$ of the leakage apparatus 1; for another example, a positioning assembly $k$ sends a positioning signal to the terminal device through a positioning area $i_k$ of the leakage apparatus $k$, and the terminal device feeds back a positioning signal to the positioning assembly $k$ through the positioning area $j_k$ of the leakage apparatus $k$.

For each signal transmission process, duration information or phase information of transmission of the positioning signal can be obtained, that is, $k$ pieces of duration information or phase information can be obtained. In addition, when the $k$ positioning assemblies respectively perform positioning signal transmission with the terminal device, $k$ pieces of in-apparatus transmission information of transmission of positioning signals in the $k$ leakage apparatuses respectively connected with the $k$ positioning assemblies can be obtained; $k$ pieces of position information of the $k$ positioning assemblies and $k$ pieces of structural information of the $k$ leakage apparatuses respectively connected with the $k$ positioning assemblies can be obtained; and in-air transmission information of transmission of positioning signals in the air can be obtained, which can be an electromagnetic wave transmission speed $c$ in the air, and/or a wavelength $\lambda$ of the positioning signals in the air. The specific content obtained is similar to the above embodiments and will not be repeated.

For each transmission process, a total transmission distance in the air of a positioning signal can be determined based on the acquired parameters. Specifically, the total transmission distance in the air of the positioning signal corresponding to each positioning assembly can be determined according to the duration information or the phase information corresponding to each positioning assembly, as well as the in-apparatus transmission information corresponding to each positioning assembly, the structural information of the leakage apparatus corresponding to each positioning assembly, and the in-air transmission information.

For each transmission process, the sum of the relative distances between the terminal device and target positioning areas that the transmission process passes can also be determined based on the acquired parameters. Specifically, the sum of relative distances corresponding to each leakage apparatus for the terminal device can be determined based on the position information corresponding to each positioning assembly, the structural information of the leakage apparatus connected with each positioning assembly, and an unknown position of the terminal device, where the sum of the relative distance corresponding to a leakage apparatus is a sum of the distance between the terminal device and each target positioning area in the leakage apparatus. In a transmission path for transmission of the positioning signal between the positioning assembly and the terminal device, the positioning signal leaks into the air through the target positioning area of the leakage apparatus, and/or the positioning signal enters the leakage apparatus from the air through the target positioning area.

After determining $k$ total transmission distances and $k$ sums of relative distances, the position of the terminal device can be determined based on an equal relationship between the corresponding total transmission distance and the corresponding sum of relative distances. Specifically, the unknown position information can be determined based on the total transmission distance in the air of the positioning signal corresponding to each positioning assembly and the sum of relative distances including the unknown position of the terminal device corresponding to each positioning assembly.

In an optional implementation, the position ($x$, $y$, $z$) of the terminal device may be determined by the following formula:

$$\left\{\begin{array}{l}
\sqrt{\begin{array}{l}
\left[x - x_1 - \displaystyle\sum_{0}^{e_1=m_{i_1g}} (l_{e_1}\sin\theta_{e_1}\cos\varphi_{e_1} + \Delta x_{e_1}) - \sum_{0}^{f_1=m_{i_1b}} (l_{f_1}\sin\theta_{f_1}\cos\varphi_{f_1} + \Delta x_{f_1}) - \left(l_{i_1}\sin\theta_{i_1}\cos\varphi_{i_1} + \Delta x_{i_1}\right)\right]^2 \\
+ \left[y - y_1 - \displaystyle\sum_{0}^{e_1=m_{i_1g}} (l_{e_1}\sin\theta_{e_1}\sin\varphi_{e_1} + \Delta y_{e_1}) - \sum_{0}^{f_1=m_{i_1b}} (l_{f_1}\sin\theta_{f_1}\sin\varphi_{f_1} + \Delta y_{f_1}) - \left(l_{i_1}\sin\theta_{i_1}\sin\varphi_{i_1} + \Delta y_{i_1}\right)\right]^2 \\
+ \left[z_1 + \displaystyle\sum_{0}^{e_1=m_{i_1g}} (l_{e_1}\cos\theta_{e_1} + \Delta z_{e_1}) + \sum_{0}^{f_1=m_{i_1b}} (l_{f_1}\cos\theta_{f_1} + \Delta z_{f_1}) + \left(l_{i_1}\cos\theta_{i_1} + \Delta z_{i_1}\right) - z\right]^2
\end{array}} \\[2em]
+ \sqrt{\begin{array}{l}
\left[x - x_1 - \displaystyle\sum_{0}^{u_1=m_{j_1g}} (l_{u_1}\sin\theta_{u_1}\cos\varphi_{u_1} + \Delta x_{u_1}) - \sum_{0}^{v_1=m_{j_1b}} (l_{v_1}\sin\theta_{v_1}\cos\varphi_{v_1} + \Delta x_{v_1}) - \left(l_{j_1}\sin\theta_{j_1}\cos\varphi_{j_1} + \Delta x_{j_1}\right)\right]^2 \\
+ \left[y - y_1 - \displaystyle\sum_{0}^{u_1=m_{j_1g}} (l_{u_1}\sin\theta_{u_1}\sin\varphi_{u_1} + \Delta y_{u_1}) - \sum_{0}^{v_1=m_{j_1b}} (l_{v_1}\sin\theta_{v_1}\sin\varphi_{v_1} + \Delta y_{v_1}) - \left(l_{j_1}\sin\theta_{j_1}\sin\varphi_{j_1} + \Delta y_{j_1}\right)\right]^2 \\
+ \left[z_1 + \displaystyle\sum_{0}^{u_1=m_{j_1g}} (l_{u_1}\cos\theta_{u_1} + \Delta z_{u_1}) + \sum_{0}^{v_1=m_{j_1b}} (l_{v_1}\cos\theta_{v_1} + \Delta z_{v_1}) + \left(l_{j_1}\cos\theta_{j_1} + \Delta z_{j_1}\right) - z\right]^2
\end{array}} \\[2em]
= \left(T_1 - \Delta t_{i_1} - \Delta t_{j_1} - \displaystyle\sum_{0}^{e_1=m_{i_1g}} \frac{l_{e_1}}{a_{e_1}\cdot c} - \sum_{0}^{f_1=m_{i_1b}} \frac{l_{f_1}}{a_{f_1}\cdot c} - \sum_{0}^{u_1=m_{j_1g}} \frac{l_{u_1}}{a_{u_1}\cdot c} - \sum_{0}^{v_1=m_{j_1b}} \frac{l_{v_1}}{a_{v_1}\cdot c} - \frac{l_{i_1}}{a_{i_1}\cdot c} - \frac{l_{j_1}}{a_{j_1}\cdot c}\right)\cdot c \\[1em]
\vdots \\[1em]
\sqrt{\begin{array}{l}
\left[x - x_k - \displaystyle\sum_{0}^{e_k=m_{i_kg}} (l_{e_k}\sin\theta_{e_k}\cos\varphi_{e_k} + \Delta x_{e_k}) - \sum_{0}^{f_k=m_{i_kb}} (l_{f_k}\sin\theta_{f_k}\cos\varphi_{f_k} + \Delta x_{f_k}) - \left(l_{i_k}\sin\theta_{i_k}\cos\varphi_{i_k} + \Delta x_{i_k}\right)\right]^2 \\
+ \left[y - y_k - \displaystyle\sum_{0}^{e_k=m_{i_kg}} (l_{e_k}\sin\theta_{e_k}\sin\varphi_{e_k} + \Delta y_{e_k}) - \sum_{0}^{f_k=m_{i_kb}} (l_{f_k}\sin\theta_{f_k}\sin\varphi_{f_k} + \Delta y_{f_k}) - \left(l_{i_k}\sin\theta_{i_k}\sin\varphi_{i_k} + \Delta y_{i_k}\right)\right]^2 \\
+ \left[z_k + \displaystyle\sum_{0}^{e_k=m_{i_kg}} (l_{e_k}\cos\theta_{e_k} + \Delta z_{e_k}) + \sum_{0}^{f_k=m_{i_kb}} (l_{f_k}\cos\theta_{f_k} + \Delta z_{f_k}) + \left(l_{i_k}\cos\theta_{i_k} + \Delta z_{i_k}\right) - z\right]^2
\end{array}} \\[2em]
+ \sqrt{\begin{array}{l}
\left[x - x_k - \displaystyle\sum_{0}^{u_k=m_{j_kg}} (l_{u_k}\sin\theta_{u_k}\cos\varphi_{u_k} + \Delta x_{u_k}) - \sum_{0}^{v_k=m_{j_kb}} (l_{v_k}\sin\theta_{v_k}\cos\varphi_{v_k} + \Delta x_{v_k}) - \left(l_{j_k}\sin\theta_{j_k}\cos\varphi_{j_k} + \Delta x_{j_k}\right)\right]^2 \\
+ \left[y - y_k - \displaystyle\sum_{0}^{u_k=m_{j_kg}} (l_{u_k}\sin\theta_{u_k}\sin\varphi_{u_k} + \Delta y_{u_k}) - \sum_{0}^{v_k=m_{j_kb}} (l_{v_k}\sin\theta_{v_k}\sin\varphi_{v_k} + \Delta y_{v_k}) - \left(l_{j_k}\sin\theta_{j_k}\sin\varphi_{j_k} + \Delta y_{j_k}\right)\right]^2 \\
+ \left[z_k + \displaystyle\sum_{0}^{u_1=m_{j_1g}} (l_{u_k}\cos\theta_{u_k} + \Delta z_{u_k}) + \sum_{0}^{v_k=m_{j_kb}} (l_{v_k}\cos\theta_{v_k} + \Delta z_{v_k}) + \left(l_{j_k}\cos\theta_{j_k} + \Delta z_{j_k}\right) - z\right]^2
\end{array}} \\[2em]
= \left(T_k - \Delta t_{i_k} - \Delta t_{j_k} - \displaystyle\sum_{0}^{e_k=m_{i_kg}} \frac{l_{e_k}}{a_{e_k}\cdot c} - \sum_{0}^{f_k=m_{i_kb}} \frac{l_{f_k}}{a_{f_k}\cdot c} - \sum_{0}^{u_k=m_{j_kg}} \frac{l_{u_k}}{a_{u_k}\cdot c} - \sum_{0}^{v_k=m_{j_kb}} \frac{l_{v_k}}{a_{v_k}\cdot c} - \frac{l_{i_k}}{a_{i_k}\cdot c} - \frac{l_{j_k}}{a_{j_k}\cdot c}\right)\cdot c
\end{array}\right. ;$$

or:

$$\left\{\begin{aligned}
&\sqrt{\begin{aligned}&\left[x - x_1 - \sum_0^{e_1=m_{i_{1g}}}(l_{e_1}\sin\theta_{e_1}\cos\varphi_{e_1}+\Delta x_{e_1}) - \sum_0^{f_1=m_{i_{1b}}}(l_{f_1}\sin\theta_{f_1}\cos\varphi_{f_1}+\Delta x_{f_1}) - \left(l_{i_1}\sin\theta_{i_1}\cos\varphi_{i_1}+\Delta x_{i_1}\right)\right]^2\\
&+\left[y - y_1 - \sum_0^{e_1=m_{i_{1g}}}(l_{e_1}\sin\theta_{e_1}\sin\varphi_{e_1}+\Delta y_{e_1}) - \sum_0^{f_1=m_{i_{1b}}}(l_{f_1}\sin\theta_{f_1}\sin\varphi_{f_1}+\Delta y_{f_1}) - \left(l_{i_1}\sin\theta_{i_1}\sin\varphi_{i_1}+\Delta y_{i_1}\right)\right]^2\\
&+\left[z_1 + \sum_0^{e_1=m_{i_{1g}}}(l_{e_1}\cos\theta_{e_1}+\Delta z_{e_1}) + \sum_0^{f_1=m_{i_{1b}}}(l_{f_1}\cos\theta_{f_1}+\Delta z_{f_1}) + \left(l_{i_1}\cos\theta_{i_1}+\Delta z_{i_1}\right) - z\right]^2\end{aligned}}\\[4pt]
&+\sqrt{\begin{aligned}&\left[x - x_1 - \sum_0^{u_1=m_{j_{1g}}}(l_{u_1}\sin\theta_{u_1}\cos\varphi_{u_1}+\Delta x_{u_1}) - \sum_0^{v_1=m_{j_{1b}}}(l_{v_1}\sin\theta_{v_1}\cos\varphi_{v_1}+\Delta x_{v_1}) - \left(l_{j_1}\sin\theta_{j_1}\cos\varphi_{j_1}+\Delta x_{j_1}\right)\right]^2\\
&+\left[y - y_1 - \sum_0^{u_1=m_{j_{1g}}}(l_{u_1}\sin\theta_{u_1}\sin\varphi_{u_1}+\Delta y_{u_1}) - \sum_0^{v_1=m_{j_{1b}}}(l_{v_1}\sin\theta_{v_1}\sin\varphi_{v_1}+\Delta y_{v_1}) - \left(l_{j_1}\sin\theta_{j_1}\sin\varphi_{j_1}+\Delta y_{j_1}\right)\right]^2\\
&+\left[z_1 + \sum_0^{u_1=m_{j_{1g}}}(l_{u_1}\cos\theta_{u_1}+\Delta z_{u_1}) + \sum_0^{v_1=m_{j_{1b}}}(l_{v_1}\cos\theta_{v_1}+\Delta z_{v_1}) + \left(l_{j_1}\cos\theta_{j_1}+\Delta z_{j_1}\right) - z\right]^2\end{aligned}}\\[4pt]
&=\left(\psi_1 - \Delta\psi_{i_1} - \Delta\psi_{j_1} - \sum_0^{e_1=m_{i_{1g}}}\frac{2\pi\cdot l_{e_1}}{\lambda_{ce_1}} - \sum_0^{f_1=m_{i_{1b}}}\frac{2\pi\cdot l_{f_1}}{\lambda_{cf_1}} - \sum_0^{u_1=m_{j_{1g}}}\frac{2\pi\cdot l_{u_1}}{\lambda_{cu_1}} - \sum_0^{v_1=m_{j_{1b}}}\frac{2\pi\cdot l_{v_1}}{\lambda_{cv_1}} - \frac{2\pi\cdot l_{i_1}}{\lambda_{ci_1}} - \frac{2\pi\cdot l_{j_1}}{\lambda_{cj_1}}\right)\cdot\frac{\lambda}{2\pi}\\
&\qquad\qquad\qquad\qquad\qquad\qquad\qquad\qquad\qquad\qquad\vdots\\
&\sqrt{\begin{aligned}&\left[x - x_k - \sum_0^{e_k=m_{i_{kg}}}(l_{e_k}\sin\theta_{e_k}\cos\varphi_{e_k}+\Delta x_{e_k}) - \sum_0^{f_k=m_{i_{kb}}}(l_{f_k}\sin\theta_{f_k}\cos\varphi_{f_k}+\Delta x_{f_k}) - \left(l_{i_k}\sin\theta_{i_k}\cos\varphi_{i_k}+\Delta x_{i_k}\right)\right]^2\\
&+\left[y - y_k - \sum_0^{e_k=m_{i_{kg}}}(l_{e_k}\sin\theta_{e_k}\sin\varphi_{e_k}+\Delta y_{e_k}) - \sum_0^{f_k=m_{i_{kb}}}(l_{f_k}\sin\theta_{f_k}\sin\varphi_{f_k}+\Delta y_{f_k}) - \left(l_{i_k}\sin\theta_{i_k}\sin\varphi_{i_k}+\Delta y_{i_k}\right)\right]^2\\
&+\left[z_k + \sum_0^{e_k=m_{i_{kg}}}(l_{e_k}\cos\theta_{e_k}+\Delta z_{e_k}) + \sum_0^{f_k=m_{i_{kb}}}(l_{f_k}\cos\theta_{f_k}+\Delta z_{f_k}) + \left(l_{i_k}\cos\theta_{i_k}+\Delta z_{i_k}\right) - z\right]^2\end{aligned}}\\[4pt]
&+\sqrt{\begin{aligned}&\left[x - x_k - \sum_0^{u_k=m_{j_{kg}}}(l_{u_k}\sin\theta_{u_k}\cos\varphi_{u_k}+\Delta x_{u_k}) - \sum_0^{v_k=m_{j_{kb}}}(l_{v_k}\sin\theta_{v_k}\cos\varphi_{v_k}+\Delta x_{v_k}) - \left(l_{j_k}\sin\theta_{j_k}\cos\varphi_{j_k}+\Delta x_{j_k}\right)\right]^2\\
&+\left[y - y_k - \sum_0^{u_k=m_{j_{kg}}}(l_{u_k}\sin\theta_{u_k}\sin\varphi_{u_k}+\Delta y_{u_k}) - \sum_0^{v_k=m_{j_{kb}}}(l_{v_k}\sin\theta_{v_k}\sin\varphi_{v_k}+\Delta y_{v_k}) - \left(l_{j_k}\sin\theta_{j_k}\sin\varphi_{j_k}+\Delta y_{j_k}\right)\right]^2\\
&+\left[z_k + \sum_0^{u_1=m_{j_{1g}}}(l_{u_k}\cos\theta_{u_k}+\Delta z_{u_k}) + \sum_0^{v_k=m_{j_{kb}}}(l_{v_k}\cos\theta_{v_k}+\Delta z_{v_k}) + \left(l_{j_k}\cos\theta_{j_k}+\Delta z_{j_k}\right) - z\right]^2\end{aligned}}\\[4pt]
&=\left(\psi_k - \Delta\psi_{i_k} - \Delta\psi_{j_k} - \sum_0^{e_k=m_{i_{kg}}}\frac{2\pi\cdot l_{e_k}}{\lambda_{ce_k}} - \sum_0^{f_k=m_{i_{kb}}}\frac{2\pi\cdot l_{f_k}}{\lambda_{cf_k}} - \sum_0^{u_k=m_{j_{kg}}}\frac{2\pi\cdot l_{u_k}}{\lambda_{cu_k}} - \sum_0^{v_k=m_{j_{kb}}}\frac{2\pi\cdot l_{v_k}}{\lambda_{cv_k}} - \frac{2\pi\cdot l_{i_k}}{\lambda_{ci_k}} - \frac{2\pi\cdot l_{j_k}}{\lambda_{cj_k}}\right)\cdot\frac{\lambda}{2\pi}
\end{aligned}\right.$$

When $i_k=j_k$, the positioning assembly $k$ and the terminal device implement at least one transmission-reception response process through the same transmission path, i.e., through transmission paths passing the same positioning module on the leakage apparatus. When there is only one transmission-reception response, $T_k$ is twice the total transmission duration of a single path between the two positioning assemblies.

When $i_k \neq j_k$, the positioning assembly $k$ and the positioning module $p$ implement at least two transmission-reception response processes through different transmission paths, i.e., through transmission paths passing different positioning modules on the leakage apparatus. $T_A$ is a total transmission duration of two paths between two positioning assemblies.

In the architecture shown in FIG. 9, the $k$ in the above formula is 2. In the present implementation, any parameter among $x$, $y$, and $z$ can be assigned a value during positioning. For example, $z$ can be assigned a value according to the position of the leakage apparatus or the position of the target positioning area in the leakage apparatus.

FIG. 10 illustrates a structural diagram of another embodiment of the present disclosure including a positioning assembly and a leakage apparatus.

As shown in FIG. 10, a first positioning assembly and a second positioning assembly are provided, and the first positioning assembly and the second positioning assembly are respectively connected with two ends of the leakage apparatus; where, each positioning assembly respectively performs positioning signal transmission with the terminal device through the leakage apparatus.

For example, the first positioning assembly is connected with a left end of the leakage apparatus, and the second positioning assembly is connected with a right end of the leakage apparatus.

In the present implementation, there is a transmission path for a positioning signal between the first positioning assembly and the terminal device, and there is another transmission path for a positioning signal between the second positioning assembly and the terminal device. A total transmission distance of the positioning signal during a transmission process can be determined for both transmission paths. In addition, a sum of relative distances between the terminal device and target positioning areas that the first transmission path passes and a sum of relative distances between the terminal device and target positioning areas that the second transmission path passes can be determined. Based on the equal relationship between the total transmission distance of the positioning signal and the corresponding sum of the relative distances, the position of the terminal device is determined.

Specifically, first duration information or first phase information of transmission of a positioning signal between the first positioning assembly and the terminal device, and second duration information or second phase information of transmission of a positioning signal between the second positioning assembly and the terminal device can be obtained; in-air transmission information of transmission of the positioning signals in the air can be obtained; first in-apparatus transmission information of transmission of the positioning signal in the leakage apparatus when the positioning signal is transmitted between the first positioning assembly and the terminal device can be obtained, and second in-apparatus transmission information of transmission of the positioning signal in the leakage apparatus when the positioning signal is transmitted between the second positioning assembly and the terminal device can be obtained; first position information of the first positioning assembly, second position information of the second positioning assembly, and structural information of the leakage apparatus can be obtained.

Furthermore, a first total transmission distance in the air of the positioning signal corresponding to the first positioning assembly can be determined based on the first duration information or the first phase information, as well as the in-air transmission information, the first in-apparatus transmission information, and the structural information of the leakage apparatus. A second total transmission distance in the air of the positioning signal corresponding to the second positioning assembly can be determined based on the second duration information or the second phase information, as well as the in-air transmission information, the second in-apparatus transmission information, and the structural information of the leakage apparatus.

In an actual application, the sum of the first relative distances between the terminal device and the first target positioning areas of the leakage apparatus can be determined based on the first position information of the first positioning assembly, the structural information of the leakage apparatus, and an unknown position of the terminal device; where, in the first transmission path for transmission of the positioning signal between the first positioning assembly and the terminal device, the positioning signal leaks into the air through the first target positioning area of the leakage apparatus, and/or the positioning signal enters the leakage apparatus from the air through the first target positioning area; and the sum of the second relative distances between the terminal device and the second target positioning areas of the leakage apparatus can be determined based on the second position information of the second positioning assembly, the structural information of the leakage apparatus, and an unknown position of the terminal device; where, in the second transmission path for transmission of the positioning signal between the second positioning assembly and the terminal device, the positioning signal leaks into the air through the second target positioning area of the leakage apparatus, and/or the positioning signal enters the leakage apparatus from the air through the second target positioning area.

Information of the unknown position can also be determined based on the first total transmission distance corresponding to the first positioning assembly, the sum of the first relative distances including the unknown position of the terminal device, as well as the second total transmission distance corresponding to the second positioning assembly and the sum of the second relative distances including the unknown position of the terminal device.

In an optional implementation, the position of the terminal device may be determined based on the following formula:

$$
\left\{
\begin{aligned}
&\sqrt{\begin{aligned}
&\left[x - x_1 - \sum_0^{e_1=m_{i_{1g}}}(l_{e_1}\sin\theta_{e_1}\cos\varphi_{e_1}+\Delta x_{e_1}) - \sum_0^{f_1=m_{i_{1b}}}(l_{f_1}\sin\theta_{f_1}\cos\varphi_{f_1}+\Delta x_{f_1}) - \left(l_{i_1}\sin\theta_{i_1}\cos\varphi_{i_1}+\Delta x_{i_1}\right)\right]^2\\
&+\left[y - y_1 - \sum_0^{e_1=m_{i_{1g}}}(l_{e_1}\sin\theta_{e_1}\sin\varphi_{e_1}+\Delta y_{e_1}) - \sum_0^{f_1=m_{i_{1b}}}(l_{f_1}\sin\theta_{f_1}\sin\varphi_{f_1}+\Delta y_{f_1}) - \left(l_{i_1}\sin\theta_{i_1}\sin\varphi_{i_1}+\Delta y_{i_1}\right)\right]^2\\
&+\left[z_1 + \sum_0^{e_1=m_{i_{1g}}}(l_{e_1}\cos\theta_{e_1}+\Delta z_{e_1}) + \sum_0^{f_1=m_{i_{1b}}}(l_{f_1}\cos\theta_{f_1}+\Delta z_{f_1}) + \left(l_{i_1}\cos\theta_{i_1}+\Delta z_{i_1}\right) - z\right]^2
\end{aligned}}\\[4pt]
&+\sqrt{\begin{aligned}
&\left[x - x_1 - \sum_0^{u_1=m_{j_{1g}}}(l_{u_1}\sin\theta_{u_1}\cos\varphi_{u_1}+\Delta x_{u_1}) - \sum_0^{v_1=m_{j_{1b}}}(l_{v_1}\sin\theta_{v_1}\cos\varphi_{v_1}+\Delta x_{v_1}) - \left(l_{j_1}\sin\theta_{j_1}\cos\varphi_{j_1}+\Delta x_{j_1}\right)\right]^2\\
&+\left[y - y_1 - \sum_0^{u_1=m_{j_{1g}}}(l_{u_1}\sin\theta_{u_1}\sin\varphi_{u_1}+\Delta y_{u_1}) - \sum_0^{v_1=m_{j_{1b}}}(l_{v_1}\sin\theta_{v_1}\sin\varphi_{v_1}+\Delta y_{v_1}) - \left(l_{j_1}\sin\theta_{j_1}\sin\varphi_{j_1}+\Delta y_{j_1}\right)\right]^2\\
&+\left[z_1 + \sum_0^{u_1=m_{j_{1g}}}(l_{u_1}\cos\theta_{u_1}+\Delta z_{u_1}) + \sum_0^{v_1=m_{j_{1b}}}(l_{v_1}\cos\theta_{v_1}+\Delta z_{v_1}) + \left(l_{j_1}\cos\theta_{j_1}+\Delta z_{j_1}\right) - z\right]^2
\end{aligned}}\\[4pt]
&=\left(T_1 - \Delta t_{i_1} - \Delta t_{j_1} - \sum_0^{e_1=m_{i_{1g}}}\frac{l_{e_1}}{a_{e_1}\cdot c} - \sum_0^{f_1=m_{i_{1b}}}\frac{l_{f_1}}{a_{f_1}\cdot c} - \sum_0^{u_1=m_{j_{1g}}}\frac{l_{u_1}}{a_{u_1}\cdot c} - \sum_0^{v_1=m_{j_{1b}}}\frac{l_{v_1}}{a_{v_1}\cdot c} - \frac{l_{i_1}}{a_{i_1}\cdot c} - \frac{l_{j_1}}{a_{j_1}\cdot c}\right)\cdot c\\[8pt]
&\sqrt{\begin{aligned}
&\left[x - x_2 - \sum_0^{e_2=m_{i_{2g}}}(l_{e_2}\sin\theta_{e_2}\cos\varphi_{e_2}+\Delta x_{e_2}) - \sum_0^{f_2=m_{i_{2b}}}(l_{f_2}\sin\theta_{f_2}\cos\varphi_{f_2}+\Delta x_{f_2}) - \left(l_{i_2}\sin\theta_{i_2}\cos\varphi_{i_2}+\Delta x_{i_2}\right)\right]^2\\
&+\left[y - y_2 - \sum_0^{e_2=m_{i_{2g}}}(l_{e_2}\sin\theta_{e_2}\sin\varphi_{e_2}+\Delta y_{e_2}) - \sum_0^{f_2=m_{i_{2b}}}(l_{f_2}\sin\theta_{f_2}\sin\varphi_{f_2}+\Delta y_{f_2}) - \left(l_{i_2}\sin\theta_{i_2}\sin\varphi_{i_2}+\Delta y_{i_2}\right)\right]^2\\
&+\left[z_2 + \sum_0^{e_2=m_{i_{2g}}}(l_{e_2}\cos\theta_{e_2}+\Delta z_{e_2}) + \sum_0^{f_2=m_{i_{2b}}}(l_{f_2}\cos\theta_{f_2}+\Delta z_{f_2}) + \left(l_{i_2}\cos\theta_{i_2}+\Delta z_{i_2}\right) - z\right]^2
\end{aligned}}\\[4pt]
&+\sqrt{\begin{aligned}
&\left[x - x_2 - \sum_0^{u_2=m_{j_{2g}}}(l_{u_2}\sin\theta_{u_2}\cos\varphi_{u_2}+\Delta x_{u_2}) - \sum_0^{v_2=m_{j_{2b}}}(l_{v_2}\sin\theta_{v_2}\cos\varphi_{v_2}+\Delta x_{v_2}) - \left(l_{j_2}\sin\theta_{j_2}\cos\varphi_{j_2}+\Delta x_{j_2}\right)\right]^2\\
&+\left[y - y_2 - \sum_0^{u_2=m_{j_{2g}}}(l_{u_2}\sin\theta_{u_2}\sin\varphi_{u_2}+\Delta y_{u_2}) - \sum_0^{v_2=m_{j_{2b}}}(l_{v_2}\sin\theta_{v_2}\sin\varphi_{v_2}+\Delta y_{v_2}) - \left(l_{j_2}\sin\theta_{j_2}\sin\varphi_{j_2}+\Delta y_{j_2}\right)\right]^2\\
&+\left[z_2 + \sum_0^{u_2=m_{j_{2g}}}(l_{u_2}\cos\theta_{u_2}+\Delta z_{u_2}) + \sum_0^{v_2=m_{j_{2b}}}(l_{v_2}\cos\theta_{v_2}+\Delta z_{v_2}) + \left(l_{j_2}\cos\theta_{j_2}+\Delta z_{j_2}\right) - z\right]^2
\end{aligned}}\\[4pt]
&=\left(T_2 - \Delta t_{i_2} - \Delta t_{j_2} - \sum_0^{e_2=m_{i_{2g}}}\frac{l_{e_2}}{a_{e_2}\cdot c} - \sum_0^{f_2=m_{i_{2b}}}\frac{l_{f_2}}{a_{f_2}\cdot c} - \sum_0^{u_2=m_{j_{2g}}}\frac{l_{u_2}}{a_{u_2}\cdot c} - \sum_0^{v_2=m_{j_{2b}}}\frac{l_{v_2}}{a_{v_2}\cdot c} - \frac{l_{i_2}}{a_{i_2}\cdot c} - \frac{l_{j_2}}{a_{j_2}\cdot c}\right)
\end{aligned}
\right.
$$

;

or:

$$\begin{cases} \sqrt{\begin{aligned}&\left[x - x_1 - \sum_0^{e_1=m_{i_{1g}}}(l_{e_1}sin\theta_{e_1}cos\varphi_{e_1}+\Delta x_{e_1}) - \sum_0^{f_1=m_{i_{1b}}}(l_{f_1}sin\theta_{f_1}cos\varphi_{f_1}+\Delta x_{f_1}) - \left(l_{i_1}sin\theta_{i_1}cos\varphi_{i_1}+\Delta x_{i_1}\right)\right]^2\\&+\left[y - y_1 - \sum_0^{e_1=m_{i_{1g}}}(l_{e_1}sin\theta_{e_1}sin\varphi_{e_1}+\Delta y_{e_1}) - \sum_0^{f_1=m_{i_{1b}}}(l_{f_1}sin\theta_{f_1}sin\varphi_{f_1}+\Delta y_{f_1}) - \left(l_{i_1}sin\theta_{i_1}sin\varphi_{i_1}+\Delta y_{i_1}\right)\right]^2\\&+\left[z_1 + \sum_0^{e_1=m_{i_{1g}}}(l_{e_1}cos\theta_{e_1}+\Delta z_{e_1}) + \sum_0^{f_1=m_{i_{1b}}}(l_{f_1}cos\theta_{f_1}+\Delta z_{f_1}) + \left(l_{i_1}cos\theta_{i_1}+\Delta z_{i_1}\right) - z\right]^2\end{aligned}}\\[2ex] +\sqrt{\begin{aligned}&\left[x - x_1 - \sum_0^{u_1=m_{j_{1g}}}(l_{u_1}sin\theta_{u_1}cos\varphi_{u_1}+\Delta x_{u_1}) - \sum_0^{v_1=m_{j_{1b}}}(l_{v_1}sin\theta_{v_1}cos\varphi_{v_1}+\Delta x_{v_1}) - \left(l_{j_1}sin\theta_{j_1}cos\varphi_{j_1}+\Delta x_{j_1}\right)\right]^2\\&+\left[y - y_1 - \sum_0^{u_1=m_{j_{1g}}}(l_{u_1}sin\theta_{u_1}sin\varphi_{u_1}+\Delta y_{u_1}) - \sum_0^{v_1=m_{j_{1b}}}(l_{v_1}sin\theta_{v_1}sin\varphi_{v_1}+\Delta y_{v_1}) - \left(l_{j_1}sin\theta_{j_1}sin\varphi_{j_1}+\Delta y_{j_1}\right)\right]^2\\&+\left[z_1 + \sum_0^{u_1=m_{j_{1g}}}(l_{u_1}cos\theta_{u_1}+\Delta z_{u_1}) + \sum_0^{v_1=m_{j_{1b}}}(l_{v_1}cos\theta_{v_1}+\Delta z_{v_1}) + \left(l_{j_1}cos\theta_{j_1}+\Delta z_{j_1}\right) - z\right]^2\end{aligned}}\\[2ex] =(\psi_1 - \Delta\psi_{i_1} - \Delta\psi_{j_1} - \sum_0^{e_1=m_{i_{1g}}}\frac{2\pi\cdot l_{e_1}}{\lambda_{ce_1}} - \sum_0^{f_1=m_{i_{1b}}}\frac{2\pi\cdot l_{f_1}}{\lambda_{cf_1}} - \sum_0^{u_1=m_{j_{1g}}}\frac{2\pi\cdot l_{u_1}}{\lambda_{cu_1}} - \sum_0^{v_1=m_{j_{1b}}}\frac{2\pi\cdot l_{v_1}}{\lambda_{cv_1}} - \frac{2\pi\cdot l_{i_1}}{\lambda_{ci_1}} - \frac{2\pi\cdot l_{j_1}}{\lambda_{cj_1}})\cdot\frac{\lambda}{2\pi}\\[3ex] \sqrt{\begin{aligned}&\left[x - x_2 - \sum_0^{e_2=m_{i_{2g}}}(l_{e_2}sin\theta_{e_2}cos\varphi_{e_2}+\Delta x_{e_2}) - \sum_0^{f_2=m_{i_{2b}}}(l_{f_2}sin\theta_{f_2}cos\varphi_{f_2}+\Delta x_{f_2}) - \left(l_{i_2}sin\theta_{i_2}cos\varphi_{i_2}+\Delta x_{i_2}\right)\right]^2\\&+\left[y - y_2 - \sum_0^{e_2=m_{i_{2g}}}(l_{e_2}sin\theta_{e_2}sin\varphi_{e_2}+\Delta y_{e_2}) - \sum_0^{f_2=m_{i_{2b}}}(l_{f_2}sin\theta_{f_2}sin\varphi_{f_2}+\Delta y_{f_2}) - \left(l_{i_2}sin\theta_{i_2}sin\varphi_{i_2}+\Delta y_{i_2}\right)\right]^2\\&+\left[z_2 + \sum_0^{e_2=m_{i_{2g}}}(l_{e_2}cos\theta_{e_2}+\Delta z_{e_2}) + \sum_0^{f_2=m_{i_{2b}}}(l_{f_2}cos\theta_{f_2}+\Delta z_{f_2}) + \left(l_{i_2}cos\theta_{i_2}+\Delta z_{i_2}\right) - z\right]^2\end{aligned}}\\[2ex] +\sqrt{\begin{aligned}&\left[x - x_2 - \sum_0^{u_2=m_{j_{2g}}}(l_{u_2}sin\theta_{u_2}cos\varphi_{u_2}+\Delta x_{u_2}) - \sum_0^{v_2=m_{j_{2b}}}(l_{v_2}sin\theta_{v_2}cos\varphi_{v_2}+\Delta x_{v_2}) - \left(l_{j_2}sin\theta_{j_2}cos\varphi_{j_2}+\Delta x_{j_2}\right)\right]^2\\&+\left[y - y_2 - \sum_0^{u_2=m_{j_{2g}}}(l_{u_2}sin\theta_{u_2}sin\varphi_{u_2}+\Delta y_{u_2}) - \sum_0^{v_2=m_{j_{2b}}}(l_{v_2}sin\theta_{v_2}sin\varphi_{v_2}+\Delta y_{v_2}) - \left(l_{j_2}sin\theta_{j_2}sin\varphi_{j_2}+\Delta y_{j_2}\right)\right]^2\\&+\left[z_2 + \sum_0^{u_2=m_{j_{2g}}}(l_{u_2}cos\theta_{u_2}+\Delta z_{u_2}) + \sum_0^{v_2=m_{j_{2b}}}(l_{v_2}cos\theta_{v_2}+\Delta z_{v_2}) + \left(l_{j_2}cos\theta_{j_2}+\Delta z_{j_2}\right) - z\right]^2\end{aligned}}\\[2ex] =(\psi_2 - \Delta\psi_{i_2} - \Delta\psi_{j_2} - \sum_0^{e_2=m_{i_{2g}}}\frac{2\pi\cdot l_{e_2}}{\lambda_{ce_2}} - \sum_0^{f_2=m_{i_{2b}}}\frac{2\pi\cdot l_{f_2}}{\lambda_{cf_2}} - \sum_0^{u_2=m_{j_{2g}}}\frac{2\pi\cdot l_{u_2}}{\lambda_{cu_2}} - \sum_0^{v_2=m_{j_{2b}}}\frac{2\pi\cdot l_{v_2}}{\lambda_{cv_2}} - \frac{2\pi\cdot l_{i_2}}{\lambda_{ci_2}} - \frac{2\pi\cdot l_{j_2}}{\lambda_{cj_2}})\cdot\frac{\lambda}{2\pi} \end{cases}.$$

FIG. 11 illustrates a structural diagram of an electronic device according to an exemplary embodiment of the present disclosure.

As shown in FIG. 11, the electronic device provided in the present embodiment includes:

a memory 111;
a processor 112; and
a computer program;
where the computer program is stored in the memory 111 and is configured to be executed by the processor 112 to implement any of the above positioning methods.

The present embodiment also provides a computer-readable storage medium including a computer program stored thereon;
where the computer program is executed by a processor to implement any of the above positioning methods.

The present embodiment further provides a computer program including program codes; and when a computer runs the computer program, the program codes execute any one of the above positioning methods.

Those skilled in the art can understand that all or part of the steps for implementing the above-mentioned method embodiments can be completed by a program instructing relevant hardware. The aforementioned program can be stored in a computer-readable storage medium. When the program is executed, the steps of the above-mentioned method embodiments are executed. The aforementioned storage medium includes: ROM, RAM, magnetic disk or optical disk and other media that can store program codes.

Finally, it should be noted that the above embodiments are only used to illustrate the technical solutions of the present disclosure, rather than to limit them. Although the present disclosure has been described in detail with reference to the aforementioned embodiments, those skilled in the art should understand that they can still modify the technical solutions described in the aforementioned embodiments, or replace some or all of the technical features therein by equivalents. However, these modifications or replacements do not cause the essence of the corresponding technical solutions to deviate from the scope of the technical solutions of the embodiments of the present disclosure.

## Claims

1. A leakage apparatus, configured to transmit a signal, comprising: at least one positioning module and at least one non-positioning module, at least one positioning area being provided in the positioning module;

   wherein, the positioning module is connected with the non-positioning module;
   the positioning area in the positioning module is configured to leak a positioning signal, and a range obtained by superimposing a coverage area of the positioning signal leaked by each positioning module in a longitudinal direction covers an area where the leakage apparatus is located, the longitudinal direction referring to an extension direction of the leakage apparatus.

2. The leakage apparatus according to claim 1, wherein the positioning module is a positioning leakage apparatus, and a first slot is provided in the positioning area; the first slot is configured to leak the positioning signal; or,
   the positioning module is an antenna.

3. The leakage apparatus according to claim 2, wherein a longitudinal length of the positioning area ranges from 0.01 m to 2000 m.

4. The leakage apparatus according to claim 1, wherein the non-positioning module comprises any one of a communication leakage apparatus, a feeder, a power divider, a coupler, a combiner, a connector, a jumper, a load and an antenna, or any combination thereof.

5. The leakage apparatus according to claim 1, wherein the positioning module is a positioning leakage apparatus and the non-positioning module is a communication leakage apparatus;
   when the positioning leakage apparatus and the communication leakage apparatus have the same specifications, the positioning leakage apparatus and the non-positioning leakage apparatus are located in the same cable.

6. The leakage apparatus according to claim 1, wherein the non-positioning module also leaks part of the positioning signal, and an intensity of the positioning signal leaked by the positioning module is at least 2 decibels greater than an intensity of the positioning signal leaked by the non-positioning module.

7. The leakage apparatus according to any one of claims 1 to 6, wherein an interval length between the positioning modules ranges from 0.02 to 1000 meters.

8. The leakage apparatus according to any one of claims 1 to 6, wherein a transmission loss generated by the positioning leakage apparatus when transmitting the positioning signal is at most 80 dB.

9. A positioning method, wherein the leakage apparatus according to any one of claims 1 to 8 is connected with a positioning assembly, the positioning assembly is configured to perform positioning signal transmission with a terminal device to be positioned via the leakage apparatus, and the method comprises:

obtaining duration information or phase information of transmission of a positioning signal between the positioning assembly and the terminal device, in-air transmission information of transmission of the positioning signal in the air, in-apparatus transmission information of transmission of the positioning signal in the leakage apparatus, position information of the positioning assembly, and structural information of the leakage apparatus; determining a positioning result of the terminal device according to the duration information or the phase information, the in-air transmission information, the in-apparatus transmission information, the position information of the positioning assembly, and the structural information of the leakage apparatus.

10. The method according to claim 9, wherein the determining the positioning result of the terminal device according to the duration information or the phase information, the in-air transmission information, the in-apparatus transmission information, the position information of the positioning assembly, and the structural information of the leakage apparatus comprises:

determining a total transmission distance in the air of the positioning signal according to the duration information or the phase information, the in-air transmission information, the in-apparatus transmission information, and the structural information of the leakage apparatus; determining a sum of a relative distance between the terminal device and each target positioning area of the leakage apparatus according to the position information of the positioning assembly, the structural information of the leakage apparatus, and an unknown position of the terminal device; wherein, in a transmission path for transmission of the positioning signal between the positioning assembly and the terminal device, the positioning signal leaks into the air through the target positioning area of the leakage apparatus, and/or the positioning signal enters the leakage apparatus from the air through the target positioning area; the sum of the relative distance comprises the unknown position of the terminal device; determining information of the unknown position according to the total transmission distance in the air of the positioning signal and the sum of the relative distance comprising the unknown position of the terminal device, wherein the information of the unknown position is the positioning result of the terminal device.

11. The method according to claim 10, wherein k positioning assemblies and the leakage apparatus corresponding to each positioning assembly are provided, wherein the positioning assembly is connected with the leakage apparatus corresponding thereto; and each positioning assembly respectively performs positioning signal transmission with the terminal device through the leakage apparatus connected thereto.

12. The method according to claim 11, wherein the obtaining the duration information or the phase information of transmission of the positioning signal between the positioning assembly and the terminal device, the in-air transmission information of transmission of the positioning signal in the air, the in-apparatus transmission information of transmission of the positioning signal in the leakage apparatus, the position information of the positioning assembly, and the structural information of the leakage apparatus comprises:

obtaining k pieces of duration information or k pieces of phase information of transmission of positioning signals between the k positioning assemblies and the terminal device; obtaining the in-air transmission information of transmission of the positioning signals in the air; obtaining k pieces of in-apparatus transmission information of transmission of the positioning signals in k leakage apparatuses respectively connected with the k positioning assemblies when the positioning signals are transmitted between the terminal device and the k positioning assemblies respectively; and obtaining k pieces of position information of the k positioning assemblies and k pieces of structural information of the k leakage apparatuses respectively connected with the k positioning assemblies; the determining the total transmission distance in the air of the positioning signal according to the duration information or the phase information, the in-air transmission information, the in-apparatus transmission information, and the structural information of the leakage apparatus comprises:

determining a total transmission distance in the air of the positioning signal corresponding to each positioning assembly, according to the duration information or the phase information corresponding to each positioning assembly, the in-apparatus transmission information, the structural information of the leakage apparatus, and the in-air transmission information;

the determining the sum of the relative distance between the terminal device and each target positioning area of the leakage apparatus according to the position information of the positioning assembly, the structural information of the leakage apparatus, and the unknown position of the terminal device comprises:

determining the sum of the relative distance corresponding to each leakage apparatus for the terminal device according to the position information corresponding to each positioning module, the structural information of the leakage apparatus connected with each positioning module, and the unknown position of the terminal device; wherein the sum of the relative distance corresponding to a leakage apparatus is a sum of a distance between the terminal device and each target positioning area in the leakage apparatus; in the transmission path for transmission of the positioning signal between the positioning assembly and the terminal device, the positioning signal leaks into the air through the target positioning area of the leakage apparatus, and/or the positioning signal enters the leakage apparatus from the air through the target positioning area;

the determining the unknown position information according to the total transmission distance in the air of the positioning signal and the sum of the relative distances comprising the unknown position of the terminal device comprises:

determining the unknown position information according to the total transmission distance in the air of the positioning signal corresponding to each positioning assembly and the sum of the relative distance comprising the unknown position of the terminal device corresponding to each positioning assembly.

13. The method according to claim 10, wherein a first positioning assembly and a second positioning assembly are provided, and the first positioning assembly and the second positioning assembly are respectively connected with two ends of the leakage apparatus; wherein each positioning assembly respectively performs, through the leakage apparatus, the positioning signal transmission with the terminal device.

14. The method according to claim 13, wherein the obtaining the duration information or the phase information of transmission of the positioning signal between the positioning assembly and the terminal device, the in-air transmission information of transmission of the positioning signal in the air, the in-apparatus transmission information of transmission of the positioning signal in the leakage apparatus, the position information of the positioning assembly, and the structural information of the leakage apparatus comprises:

obtaining first duration information or first phase information of transmission of the positioning signal between the first positioning assembly and the terminal device, and second duration information or second phase information of transmission of the positioning signal between the second positioning assembly and the terminal device;

obtaining the in-air transmission information of transmission of the positioning signal in the air;

obtaining first in-apparatus transmission information of transmission of the positioning signal in the leakage apparatus when the positioning signal is transmitted between the first positioning assembly and the terminal device, and second in-apparatus transmission information of transmission of the positioning signal in the leakage apparatus when the positioning signal is transmitted between the second positioning assembly and the terminal device;

obtaining first position information of the first positioning assembly, second position information of the second positioning assembly, and structural information of the leakage apparatus;

the determining the total transmission distance in the air of the positioning signal according to the duration information or the phase information, the in-air transmission information, the in-apparatus transmission information, and the structural information of the leakage apparatus comprises:

determining a first total transmission distance in the air of the positioning signal corresponding to the first positioning assembly according to the first duration information or the first phase information, the in-air transmission information, the first in-apparatus transmission information, and the structural information of the leakage apparatus;

determining a second total transmission distance in the air of the positioning signal corresponding to the second positioning assembly according to the second duration information or the second phase information, the in-air transmission information, the second in-apparatus transmission information, and the structural information of the leakage apparatus;

the determining the sum of the relative distance between the terminal device and each target positioning area of the leakage apparatus according to the position information of the positioning assembly, the structural information of the leakage apparatus, and the unknown position of the terminal device comprises:

determining a sum of a first relative distance between the terminal device and each first target positioning area of the leakage apparatus according to the first position information of the first positioning assembly, the structural information of the leakage apparatus, and the unknown position of the terminal device; wherein, in a first transmission path for transmission of the positioning signal between the first positioning assembly and the terminal device, the positioning signal leaks into the air through the first target positioning area of the leakage apparatus, and/or the positioning signal enters the leakage apparatus from the air through the first target positioning area;

determining a sum of a second relative distance between the terminal device and each second target positioning area of the leakage apparatus according to the second position information of the second positioning assembly, the structural information of the leakage apparatus, and the unknown position of the terminal device; wherein, in a second transmission path for transmission of the positioning signal between the second positioning assembly and the terminal device, the positioning signal leaks into the air through the second target positioning area of the leakage apparatus, and/or the positioning signal enters the leakage apparatus from the air through the second target positioning area;

the determining the information of the unknown position according to the total transmission distance in the air of the positioning signal and the sum of the relative distance comprising the unknown position of the terminal device comprises:

determining the unknown position information based on the first total transmission distance corresponding to the first positioning assembly and the sum of the first relative distance comprising the unknown position of the terminal device, and the second total transmission distance corresponding to the second positioning assembly, the sum of the second relative distance comprising the unknown position of the terminal device.

15. An electronic device, comprising:

a memory;
a processor; and
a computer program;
wherein the computer program is stored in the memory and is configured to be executed by the processor to implement the method according to any one of claims 9 to 14.

11  12                                                                                      10

FIG. 1

21                                                    22                              20

211    A

FIG. 2

21

22

FIG. 3

40

41                                              41

FIG. 4

50

51    52    521

511

FIG. 5

Obtaining duration information or phase information of transmission
of a positioning signal between a positioning assembly and a
terminal device, in-air transmission information of transmission of
the positioning signal in the air, in-apparatus transmission
information of transmission of the positioning signal in a leakage
apparatus, as well as position information of the positioning
assembly and structural information of the leakage apparatus

601

Determining a positioning result of the terminal device according to
the duration information or the phase information, as well as the in-
air transmission information, the in-apparatus transmission
information, the position information of the positioning assembly,
and the structural information of the leakage apparatus

602

FIG. 6

Positioning
assembly 1    i1    j1

X

Y    p

FIG. 7

Positioning
assembly 1    i1    j1    $\varphi 1$

Positioning
assembly k    ik    jk    $\varphi k$

Z

X    p

FIG. 8

FIG. 9

FIG. 10

FIG. 11

## INTERNATIONAL SEARCH REPORT

| International application No. |
|---|
| **PCT/CN2023/125766** |

| A. | CLASSIFICATION OF SUBJECT MATTER |
|---|---|

G01S5/02(2010.01)i

According to International Patent Classification (IPC) or to both national classification and IPC

| B. | FIELDS SEARCHED |
|---|---|

Minimum documentation searched (classification system followed by classification symbols)

IPC: G01S5

Documentation searched other than minimum documentation to the extent that such documents are included in the fields searched

Electronic data base consulted during the international search (name of data base and, where practicable, search terms used)

CNABS, CNTXT, WPABSC, ENTXTC: 中天射频电缆有限公司, 定位, 位置, 坐标, 泄漏, 泄露, 外泄, 漏泄, 电缆, 通信, 信号, 波, 多径, 多路, position, location, leak+, cable, signal?, wave, multipath?, multi 3d path

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116660826 A (ZHONGTIAN RADIO FREQUENCY CABLE CO., LTD. et al.) 29 August 2023 (2023-08-29) claims 1-15, description, paragraphs 5-164, and figures 1-11 | 1-15 |
| X | CN 114142198 A (XI'AN MEILONG CONTROL ENGINEERING CO., LTD. et al.) 04 March 2022 (2022-03-04) description, paragraphs 40-53, and figures 4 and 7 | 1-8, 15 |
| Y | CN 114142198 A (XI'AN MEILONG CONTROL ENGINEERING CO., LTD. et al.) 04 March 2022 (2022-03-04) description, paragraphs 40-53, and figures 4 and 7 | 9 |
| Y | CN 109782266 A (JIANGSU ZHONGTIAN TECHNOLOGY CO., LTD. et al.) 21 May 2019 (2019-05-21) description, paragraphs 67-108 | 9 |
| A | CN 111856396 A (TRAFFIC CONTROL TECHNOLOGY CO., LTD.) 30 October 2020 (2020-10-30) entire document | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2024** | **08 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/125766**

### C. DOCUMENTS CONSIDERED TO BE RELEVANT

| Category* | Citation of document, with indication, where appropriate, of the relevant passages | Relevant to claim No. |
|---|---|---|
| A | CN 111432363 A (ZHONGTIAN RADIO FREQUENCY CABLE CO., LTD. et al.) 17 July 2020 (2020-07-17)<br>entire document | 1-15 |
| A | WO 2013182021 A1 (TONG YINGWEI et al.) 12 December 2013 (2013-12-12)<br>entire document | 1-15 |
| A | WO 2022206261 A1 (ZHONGTIAN RADIO FREQUENCY CABLE CO., LTD. et al.) 06 October 2022 (2022-10-06)<br>entire document | 1-15 |

Form PCT/ISA/210 (second sheet) (July 2022)

**INTERNATIONAL SEARCH REPORT**
Information on patent family members

International application No.

**PCT/CN2023/125766**

| Patent document cited in search report | | | Publication date (day/month/year) | Patent family member(s) | | | Publication date (day/month/year) |
|---|---|---|---|---|---|---|---|
| CN | 116660826 | A | 29 August 2023 | None | | | |
| CN | 114142198 | A | 04 March 2022 | None | | | |
| CN | 109782266 | A | 21 May 2019 | None | | | |
| CN | 111856396 | A | 30 October 2020 | None | | | |
| CN | 111432363 | A | 17 July 2020 | WO | 2021179765 | A1 | 16 September 2021 |
| WO | 2013182021 | A1 | 12 December 2013 | None | | | |
| WO | 2022206261 | A1 | 06 October 2022 | US | 2023012446 | A1 | 12 January 2023 |
| | | | | EP | 4106354 | A1 | 21 December 2022 |

Form PCT/ISA/210 (patent family annex) (July 2022)

**EP 4 603 862 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310575091